(19) Europäisches Patentamt
European Patent Office
Office européen des brevets

(11) Publication number: **0 048 562**
**B1**

(12) # EUROPEAN PATENT SPECIFICATION

(45) Date of publication of patent specification: **29.08.84**

(51) Int. Cl.³: **C 08 K 5/00,** C 08 L 23/12

(21) Application number: **81304062.3**

(22) Date of filing: **07.09.81**

(54) **Combination of phenolic oxamide and phosphite stabilizers for organic materials.**

(30) Priority: **18.09.80 US 188190**
**04.05.81 US 260146**

(43) Date of publication of application:
**31.03.82 Bulletin 82/13**

(45) Publication of the grant of the patent:
**29.08.84 Bulletin 84/35**

(84) Designated Contracting States:
**BE DE FR GB IT NL**

(56) References cited:
**EP-A-0 002 616**
**EP-A-0 010 346**
**US-A-4 187 212**

(73) Proprietor: **UNIROYAL, INC.**
**1230 Avenue of the Americas Rockefeller Center**
**New York, New York 10020 (US)**

(72) Inventor: **Paolino, Paula Ann**
**33 East Hill Road**
**Watertown Connecticut 06795 (US)**

(74) Representative: **Harrison, Michael Robert et al**
**URQUHART-DYKES & LORD 11th Floor Tower**
**House Merrion Way**
**Leeds LS2 8PB West Yorkshire (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 048 562 B1**

Courier Press, Leamington Spa, England.

## Description

This invention relates to a combination of stabilizers for organic materials.

More particularly the invention relates to a stabilizing composition comprising

(A) a phenolic oxamide compound having the structural formula

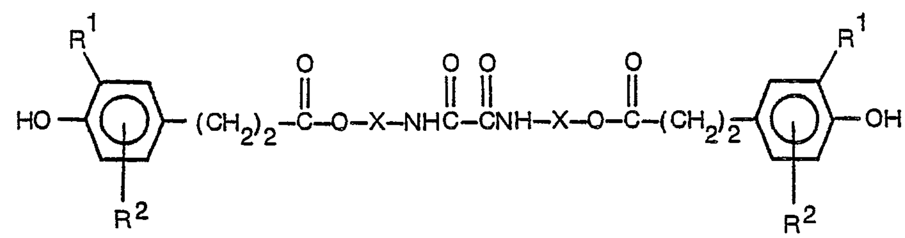

wherein $R^1$ is alkyl (linear or branched, primary, secondary or tertiary) having 1 to 8 carbon atoms, $R^2$ is hydrogen or alkyl having 1 to 8 carbon atoms, and X is alkylene having 1 to 12 carbon atoms, and

(B) a phosphite compound selected from the group consisting of tris(2,4-di-t-butylphenyl) phosphite, distearyl pentaerythritol diphosphite, tetrakis (2,4-di-t-butylphenyl)-4,4′-biphenylene diphosphonite, tris (nonylphenyl) phosphite, bis(2,4-di-t-butyl) pentaerythritol diphosphite and triphenyl phosphite.

The stabilization of organic materials, especially polymers, normally subject to deterioration over a period of time by exposure to such adverse influences as air and elevated temperature, by the addition of various stabilizers such as certain phenolic oxamides or phosphites has previously been known, but it has been desired to provide more satisfactory protection in an economical and convenient manner.

Typical prior stabilization practices are illustrated in such U.S. patents as 4,145,556, Hirsch et al, Mar. 20, 1979; 4,154,723, Hirsch et al, May 15, 1979; and 4,187,212, Zinka et al, Feb. 5, 1980.

The present invention is based on the surprising discovery that a remarkably high level of protection is achieved by employing a combination of the above-defined phenolic oxamide compound (A) and phosphite compound (B) as the stabilizer system.

The phenolic oxamide compounds (A) employed in the combination of the invention are described in detail in U.S. patent 4,145,556, particularly the working examples therein which illustrate a variety of phenolic oxamides which may be used in the present invention.

The ratio of phenolic oxamide compound (A) to phosphite compound (B) employed in the mixed stabilizer composition of the invention may vary widely, for example from 1:9 to 9:1, preferably from 2:8 to 8:2, and more preferably from 4:6 to 6:4, by weight.

To stabilize an organic material in accordance with the invention the material is mixed, by any suitable conventional means, with at least one of the phenolic oxamide compounds (A) and at least one of the described phosphite compounds (B), separately or together, in a stabilizingly effective amount. Remarkably small quantities of the mixed stabilizer composition of the invention are effective, e.g., from 0.005% or less to 5% or more, preferably from 0.05 to 1%, more preferably from 0.1 to 0.5%, based on the weight of the material to be stabilized. The optimum amount in any given case will depend on such variables as the degree of stabilization desired, the particular material being stabilized, etc., and is readily determinable with the aid of standard tests for evaluating stabilizers in various materials.

If desired, the stabilizer composition of the invention can be employed in combination with other stabilizers, e.g. dilauryl or distearyl beta-thiodipropionate, antiozonants, thermal stabilizers, ultraviolet light absorbers and/or with coloring materials, dyes, pigments, metal chelating agents, etc.

The organic materials which can be stabilized in accordance with this invention by admixing with phenolic oxamide (A) and phosphite (B), include polyolefins which can be homopolymers of unsubstituted olefinic hydrocarbons, such as, e.g. ethylene, propylene, 1-butylene, 1,3-butadiene and styrene, homopolymers of substituted olefinic hydrocarbons such as, e.g. vinyl halides such as vinyl chloride and esters such as acetate, vinyl alcohols, acrylonitrile and methacrylonitrile, or copolymers of two or more of such substituted and/or unsubstituted olefinic hydrocarbons. Also included are condensation polymers such as, e.g. polyalkylene oxides polyurethanes, polycarbonates, polyesters such as polyethylene terephthalates and polyamides such as polyhexamethylene adipamide and polycarpolactam. Other organic materials which can be stabilized by this invention include lubricating oils, e.g. of the aliphatic ester type such as di(2-ethylhexyl)azelate and pentaerythritol tetracaprolate, animal and vegetable derived oils such as linseed oil, fat, tallow, lard, peanut oil, cod liver oil, castor oil, palm oil, corn oil and cottonseed oil, fatty acids such as soaps, and other hydrocarbon materials such as gasoline, mineral oil, fuel oil, drying oil, cutting fluids and waxes.

It is possible with the stabilizer mixture according to the invention to stabilize, for example, the following polyolefins:

1. polymers that are derived from singly unsaturated hydrocarbons, such as polyolefins, e.g. polyethylene of low and high density, which can optionally be crosslinked, polypropylene, polyisobutylene, polymethylbutene-1 and polymethylpentene-1;

2. mixtures of the homopolymers mentioned under 1, such as mixtures of polypropylene and polyethylene, polypropylene and polybutene-1, polypropylene and polyisobutylene;

3. copolymers of the monomers on which the homopolymers mentioned under 1 are based, such as ethylene/propylene copolymers, propylene/butene-1 copolymers, propylene/isobutylene copolymers, ethylene/butene-1 copolymers, as well as terpolymers of ethylene and propylene with a diene, such as hexadiene, di-cyclopentadiene or ethylidenenorbornene.

The following examples in which all quantities are expressed by weight unless otherwise indicated, will serve to illustrate the practice of the invention in more detail.

## Example 1

This example illustrates the stabilization of polypropylene resin with combinations of (A) a phenolic oxamide, N,N'-bis[2-(3-[3,5-di-t-butyl-4-hydroxyphenyl]propionyloxy)ethyl]oxamide, identified as "BPEO" in Table I, and (B) the following phosphites (identified in Table I by the letters indicated):

tris(2,4-di-t-butylphenyl)phosphite "TBPP"
distearlypentaerythritol diphosphite "DSPD"
tetrakis (2,4-di-t-butylphenyl)-4,4'-biphenylene diphosphonite "TPBD"

The effectiveness of the stabilizer combinations is evaluated by observing changes in the melt flow index of the polypropylene after multiple extrusions. Control stocks containing no stabilizer (Run 1 in Table I), or the stabilizing components individually (Runs, 2, 3, 4 and 5 in Table I), are included for comparison with stocks of the invention containing both the phenolic oxamide (A) and a phosphite (B) (Runs 6, 7 and 8 in Table I).

The stocks represented in Table I are prepared by dry mixing in a Hobart (trademark) mixer 100 parts of powdered unstabilized polypropylene (average molecular weight about 72,000; "Profax 6501" [trademark]) with 0.1 part of the stabilizers shown. The mixtures are extruded on a 1½" (38.1 mm) Davis Standard (trademark) extruder equipped with three screens (60/80/100 mesh; 0.25/0.177/0.149 mm) and a 3/4" (19.05 mm) bar die (length to diameter ratio 30:1), using a single stage screw. The extrusion is conducted with the following temperature profile: feed 188°; transition 190°, 193°; metering 196°, 199°; and die 205°C, at 20 RPM. Forty gram samples are taken and re-chopped in a Wiley (trademark) size 0 mill and the melt flow index is measured according to ASTM D 1238—70, condition L, and recorded as the initial melt flow index. The remaining chopped resin after the initial pass is re-extruded 5 times at a temperature of 260°C throughout the extruder (a condition designed to bring about thermal degradation of the polypropylene, i.e., a chain scission with consequent decrease in molecular weight and increased tendency to flow), at 20 RPM. The final extrudate is chopped, 40 gram samples taken and re-chopped on a Wiley mill. The melt flow index is measured as before and recorded as the final melt flow index. The effectiveness of the stabilizers is reflected in the melt flow index; the lower melt flow index values indicate higher viscosities, i.e., less chain scission is taking place. Table 1 shows the initial values of the melt flow index, and the values after 5 passes through the extruder at 260°C. It is manifest from the data in Table I that the stocks containing the stabilizer combinations of the invention (Runs 6, 7 and 8) are remarkably resistant to degradation. This is particularly unexpected in view of the antagonism sometimes observed between phosphites and other stabilizers.

TABLE I
Melt Flow Index of Stabilized Polypropylene

| Run No.: Composition (parts) | 1 | 2 | 3 | 4 | 5 | 6 | 7 | 8 |
|---|---|---|---|---|---|---|---|---|
| Polypropylene | 100 | 100 | 100 | 100 | 100 | 100 | 100 | 100 |
| BPEO | — | .1 | — | — | — | .1 | .1 | .1 |
| TBPP | — | — | .1 | — | — | .1 | — | — |
| DSPD | — | — | — | .1 | — | — | .1 | — |
| TPBD | — | — | — | — | .1 | — | — | .1 |
| Melt Flow Index | | | | | | | | |
| Initial | 5.7 | 3.9 | 3.5 | 4.1 | 3.2 | 2.8 | 3.6 | 3.1 |
| After 5 passes at 260°C | 24.2 | 9.6 | 12.1 | 20.6 | 7.8 | 8.2 | 8.8 | 7.1 |
| Change | 18.5 | 5.7 | 8.6 | 16.5 | 4.6 | 5.4 | 5.2 | 4.0 |

Example 2

Polypropylene/antioxidant mixtures were essentially prepared according to the procedure of Example 1. The polypropylene also contained about 0.1 ppH calcium stearate, and the initial melt flow index (MFI) was determined to be about 4. This example illustrates the stabilization of the polypropylene resin with combinations of phenolic oxamide, viz., N,N'-bis[2-(3-[3,5-di-t-butyl-4-hydroxyphenyl]propionyloxy)ethyl]oxamide, identified as "PBEO" in Table II, and the following phosphites (identified in Table II by the letters indicated):

tris(2,4-di-t-butylphenyl)phosphite "TBPP"
distearylpentaerythritol diphosphite "DSPD"
tetrakis(2,4-di-t-butylphenyl)-4,4'biphenylene diphosphonite "TPBD"

The effectiveness of the stabilizer combinations is evaluated by observing changes in the melt flow index of the polypropylene after multiple extrusions. Control stocks containing no stabilizer (Run 9 in Table II), or the stabilizing components individually (Runs 10, 11, 12 and 13 in Table II), are included for comparison with stocks of the invention containing both the phenolic oxamide and a phosphite (Runs 14, 15 and 16 in Table II).

The various resin/antioxidant mixtures were kneaded for 30 minutes at 400°F (204°C) in a Brabender Plastograph (Trademark) at 25 RPM. Subsequently, these samples were chopped according to Example 1, and their MFI's were measured.

TABLE II

| Run No.:<br>Composition (parts) | 9 | 10 | 11 | 12 | 13 | 14 | 15 | 16 |
|---|---|---|---|---|---|---|---|---|
| Polypropylene | 100 | 100 | 100 | 100 | 100 | 100 | 100 | 100 |
| BPEO | — | 0.1 | — | — | — | 0.05 | 0.05 | 0.05 |
| TBPP | — | — | 0.1 | — | — | 0.05 | — | — |
| DSPD | — | — | — | 0.1 | — | — | 0.05 | — |
| TPBD | — | — | — | — | 0.1 | — | — | 0.05 |
| MFI (After Kneading) | 20.8 | 8.0 | 9.2 | 8.9 | 5.9 | 5.5 | 4.6 | 5.1 |

The above results clearly indicate that in every instance the polypropylene containing the antioxidative *mixtures* exhibits considerably enhanced stability (i.e., lower MFI) over the polypropylene protected by the single antioxidants, *at the same total concentration.*

Example 3

Example 2 is repeated using the same phenolic oxamide (BPEO) as previously, but substituting the following phosphites:

TNPP tris(nonylphenyl) phosphite (70% on silica, 30%);
BBPD bis(2,4-di-t-butyl) pentaerythritol diphosphite;
TPP triphenyl phosphite.

The results are as shown in Table III, wherein Runs 22, 23 and 24 (containing both the oxamide and the phosphite) represent the invention. Runs 17—21 are for comparison only.

TABLE III

| Run No.:<br>Composition (parts) | 17 | 18 | 19 | 20 | 21 | 22 | 23 | 24 |
|---|---|---|---|---|---|---|---|---|
| Polypropylene | 100 | 100 | 100 | 100 | 100 | 100 | 100 | 100 |
| $BPEO_{(1)}$ | — | 0.1 | — | — | — | 0.05 | 0.05 | 0.05 |
| $TNPP_{(2)}$ | — | — | 0.1 | — | — | 0.05 | — | — |
| BBPD(3) | — | — | — | 0.1 | — | — | 0.05 | — |
| TPP | — | — | — | — | 0.1 | — | — | 0.05 |
| MFI (After Kneading) | 20.8 | 8.0 | 10.9 | 5.0 | 16.2 | 7.2 | 4.2 | 4.8 |

Remarks:
1. Tris(nonylphenyl)phosphite (70% on silica, 30%).
2. Bis(2,4-di-t-butyl)pentaerythritol diphosphite.
3. Triphenyl phosphite.

Experiments of Table III were carried out simultaneously with those of Table II; Runs 9 and 17 are one and the same experiment, also 10 and 18.

In all instances (Runs 22—23) synergistic behavior of the mixtures is clearly demonstrated over the respective antioxidants alone (Runs 18—21).

## Claims

1. A stabilizing composition characterised in that it comprises
(A) a phenolic oxamide compound having the structural formula

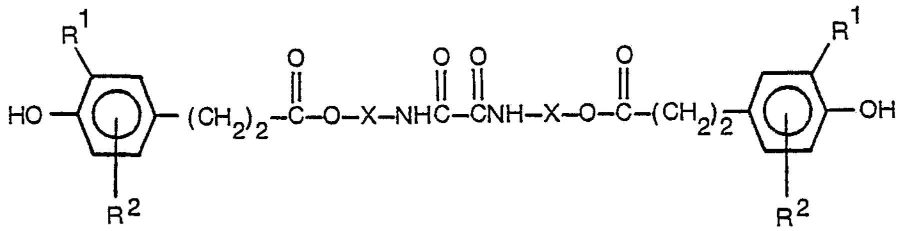

wherein $R^1$ is alkyl having 1 to 8 carbon atoms, $R^2$ is hydrogen or alkyl having 1 to 8 carbon atoms and X is alkylene having 1 to 12 carbon atoms, in admixture with

(B) a phosphite compound selected from tris(2,4-di-t-butylphenyl)phosphite distearyl pentaerythritol diphosphite, tetrakis(2,4-di-t-butylphenyl)-4-4′-biphenylenediphosphite, tris(nonylphenyl) phosphite, bis(2,4-di-t-butyl)-pentaerythritol diphosphite, and tri-phenyl phosphite.

2. A composition according to claim 1 characterised in that the said phenolic oxamide (A) is N,N′-bis[2-(3-[3,5-di-t-butyl-4-hydroxyphenyl]propionyloxy)-ethyl]oxamide.

3. A stabilized composition characterised in that it comprises an organic material normally subject to deterioration upon aging, in admixture with a stabilizingly effective amount of a stabilizer composition as claimed in claim 1 or claim 2.

4. A composition according to claim 3 characterised in that the said organic material is polypropylene resin.

5. A method of stabilizing an organic material normally subject to deterioration upon aging characterised in that the method comprises mixing said material with a stabilizingly effective amount of a stabilizer composition as claimed in claim 1 or claim 2.

6. A method according to claim 5 characterized in that the said organic material is polypropylene resin.

## Patentansprüche

1. Stabilisiermasse, dadurch gekennzeichnet, daß sie
(A) eine phenolische Oxamidverbindung mit der Strukturformel

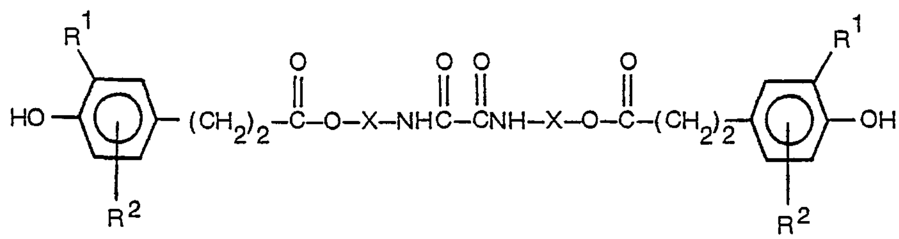

worin $R^1$ Alkyl mit 1 bis 8 Kohlenstoffatomen ist, $R^2$ Wasserstoff oder Alkyl mit 1 bis 8 Kohlenstoffatomen ist und X Alkylen mit 1 bis 12 Kohlenstoffatomen ist, in Form einer Mischung mit

(B) einer Phosphitverbindung, die aus Tris (2,4-di-t-butylphenyl)phosphit, Distearylpentaerythritdiphosphit, Tetrakis(2,4-di-t-butylphenyl)-4,4′-biphenylendiphosphonit, Tris(nonylphenyl)phosphit, Bis(2,4-di-t-butyl)pentaerythritdiphosphit und Triphenylphosphit ausgewählt ist, enthält.

2. Masse nach Anspruch 1, dadurch gekennzeichnet, daß das phenolische Oxamid (A) N,N′-Bis[2-(3-[3,5-di-t-butyl-4-hydroxyphenyl]-propionyloxy)-ethyl]oxamid ist.

3. Stabilisierte Masse, dadurch gekennzeichnet, daß sie ein organisches Material, das bei der Alterung normalerweise einer Zersetzung unterliegt, in Form einer Mischung mit einer zum Stabilisieren wirksamen Menge einer Stabilisiermasse nach Anspruch 1 oder Anspruch 2 enthält.

4. Masse nach Anspruch 3, dadurch gekennzeichnet, daß das organische Material Polypropylenharz ist.

5. Verfahren zum Stabilisieren eines organischer Materials, das bei der Alterung normalerweise einer Zersetzung unterliegt, dadurch gekennzeichnet, daß das Material bei dem Verfahren mit einer zum Stabilisierer wirksamen Menge einer stabilisiermasse nach Anspruch 1 oder Anspruch 2 vermischt wird.

6. Verfahren nach Anspruch 5, dadurch gekennzeichnet, daß das organische Material Polypropylenharz ist.

**Revendications**

1. Composition stabilisante caractérisé en ce qu'elle comprend
(A) un composé d'oxamide phénolique ayant la formule de structure

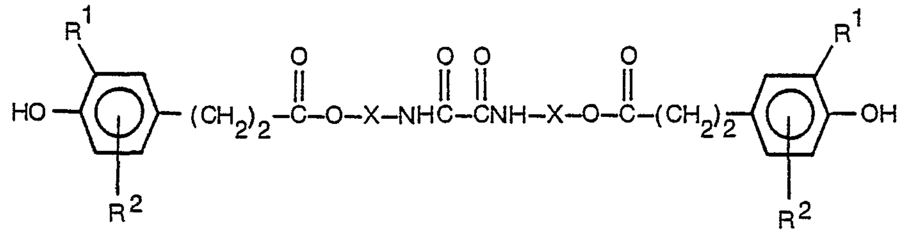

où $R^1$ est un alcoyle ayant 1 à 8 atomes de carbone, $R^2$ est de l'hydrogène ou un alcoyle ayant 1 à 8 atomes de carbone et X est un alcoylène ayant 1 à 12 atomes de carbone, en mélange avec

(B) un composé de phosphite choisi parmi le tris(2,4-di-t-butylphényl)phosphite, le distéaryl pentaérythritol diphosphite, le tétrakis(2,4-di-t-butylphényl)-4-4'-biphénylènediphosphonite, le tris(nonylphényl)phosphite, le bis(2,4-di-t-butyl)pentaérythritol diphosphite, et le tri-phényl phosphite.

2. Composition selon la revendication 1, caractérisée en ce que ledit oxamide phénolique (A) est du N,N'-bis[2-(3-[3,5-di-t-butyl-4-hydroxyphényl]-propionyloxy)-éthyl]oxamide.

3. Composition stabilisée caractérisé en ce qu'elle comprend une matière organique normalement sujette à une détérioration lors d'un vieillissement, en mélange avec une quantité efficace pour stabiliser d'une composition stabilisante selon la revendication 1 ou la revendication 2.

4. Composition selon la revendication 3, caractérisé en ce que ladite matière organique est de la résine de polypropylène.

5. Méthode de stabilisation d'une matière organique normalement sujette à une détérioration au vieillissement, caractérisée en ce que la méthode consiste à mélanger ladite matière à une quantité efficace pour la stabilisation d'une composition stabilisante selon la revendication 1 ou la revendication 2.

6. Méthode selon la revendication 5, caractérisée en ce que ladite matière organique est de la résine de polypropylène.